Europäisches Patentamt

(19) European Patent Office

Office européen des brevets

(11) Numéro de publication: **0 254 112**
**B1**

(12) **FASCICULE DE BREVET EUROPEEN**

(45) Date de publication du fascicule du brevet:
07.02.90

(51) Int. Cl.⁴: **B60C 29/00**, F16K 15/20

(21) Numéro de dépôt: 87109680.6

(22) Date de dépôt: 06.07.87

(54) **Valve pour pneumatique sans chambre : fixation du corps de valve sur la jante.**

(30) Priorité: 24.07.86 FR 8610872

(43) Date de publication de la demande:
27.01.88 Bulletin 88/4

(45) Mention de la délivrance du brevet:
07.02.90 Bulletin 90/6

(84) Etats contractants désignés:
AT BE CH DE ES FR GB GR IT LI LU NL SE

(56) Documents cités:
DE-A- 2 813 742
FR-A- 2 385 548
US-A- 3 542 109
US-A- 4 340 080
US-A- 4 411 302

(73) Titulaire: **MICHELIN & CIE (Compagnie Générale des Etablissements Michelin) Société dite:, 4 rue du Terrail, F-63000 Clermont-Ferrand(FR)**

(72) Inventeur: **Madrona, Gilbert, Sucheras Sauviat, F-63120 Courpiere(FR)**

(74) Mandataire: **Renaudie, Jacques et al, Michelin & Cie Service K. Brevets, F-63040 Clermont-Ferrand Cédex(FR)**

ACTORUM AG

## Description

La présente invention se rapporte aux valves pour pneumatique sans chambre telles que définies dans le préambule de la revendication 1 et connues par exemple de FR-A 2 385 548. Elle concerne plus spécialement la fixation desdites valves sur la jante.

Par le brevet FR-A 2 385 548, on connaît une valve pour pneumatique sans chambre comportant, à las périphérie de la partie du corps de valve située après montage à l'extérieur de la jante, des éléments élastiques dans le sens radial et rigides dans le sens axial. Les sens radiaux et axiaux sont ici définis par rapport à l'axe de la valve. Il en résulte que le montage de la valve se fait très facilement en introduisant la valve par l'intérieur de la jante dans le trou de jante et en poussant ladite valve vers l'extérieur de la jante. Lesdits éléments se rapprochent du corps de valve 2 (autrement dit, ils s'effacent au passage du trou de valve) puis s'écartent du corps de valve pour prendre leur position finale dans laquelle les éléments montés appuient axialement sur la face extérieure de la jante. La tenue en place et l'étanchéité sont assurées par la compression d'un joint entre le pied de valve et la face intérieure de la jante.

La fixation sur la jante de ce type de valve peut, en cas de sollicitations extrêmes, poser quelques difficultés. En effet, du fait de leur déformabilité dans le sens radial, les éléments élastiques peuvent glisser radialement vers l'extérieur, ou bien même glisser radialement vers l'intérieur si la forme de l'arête du trou de valve aménagé sur la jante favorise un mouvement de rapprochement radial vers le corps de valve, et donc tomber axialement vers l'intérieur de la jante, n'assurant plus leur rôle de maintien. Il peut en résulter un basculement de la valve, donc une décompression du joint d'étanchéité pouvant être accompagnée d'une perte de pression du pneumatique.

Le but de la présente invention est d'assurer une meilleure tenue des éléments élastiques lorsqu'ils sont sollicités par des efforts importants, par exemple dus à la force centrifuge appliquée à la valve afin qu'ils puissent toujours maintenir la valve immobile par rapport à la jante, même lorsque le trou de valve est de forme imparfaite.

Selon l'invention, la valve pour pneumatique sans chambre, du type comportant un corps de valve autour duquel sont disposés des éléments élastiques dans le sens radial et rigides dans le sens axial, lesdits éléments étant susceptibles de se rapprocher du corps de valve pour passer dans le trou de valve puis de s'écarter vers leur position de montage pour assurer la fixation de la valve sur la jante est caractérisée en ce que l'extrémité axialement intérieure de chaque élément élastique présente, en coupe selon un plan perpendiculaire à l'axe de la valve, une section pouvant être déformée élastiquement de façon à faire varier l'encombrement (e) dans le sens radial de ladite section, ledit encombrement dans le sens radial desdits éléments élastiques étant, en position finale, supérieur au jeu constitué par la moitié de la différence entre le diamètre du trou de valve et le diamètre extérieur du corps de valve.

Les dessins suivants illustrent de manière non limitative un exemple de réalisation de l'invention.

La figure 1 est une perspective montrant une valve selon l'invention.

La figure 2 est une vue en élévation, avec coupes partielles, suivant AA et BB à la figure 3.

La figure 3 est une coupe selon III–III à la figure 2, sans faire figurer la jante 4 pour des raisons de clarté.

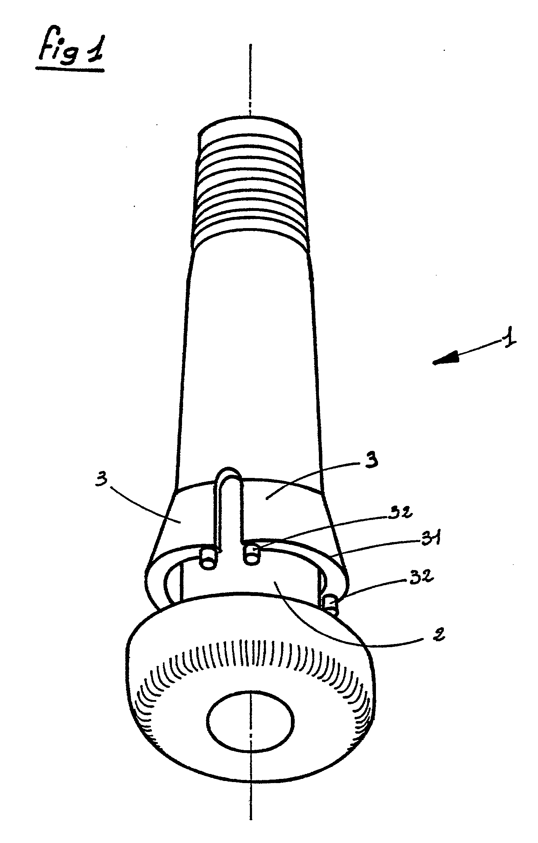

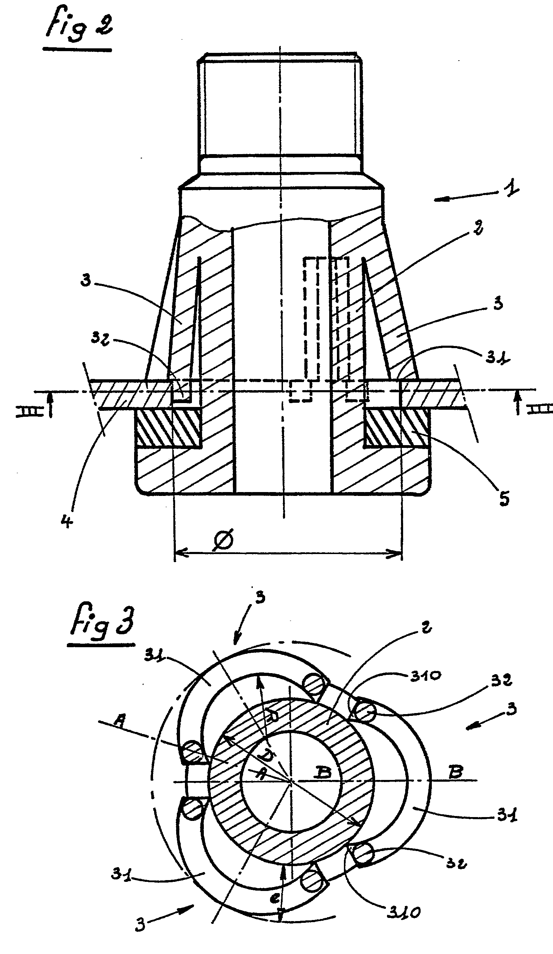

On voit aux figures 1 et 2 une valve 1 comportant un corps 2 de valve autour duquel sont disposés des éléments élastiques 3. Ceux-ci sont, comme connu en soi, conformés de manière à pouvoir se déformer au passage d'un trou de valve prévu sur la jante.

A la figure 3, on a désigné par "e" l'encombrement dans le sens radial des éléments élastiques 3. Lorsque la valve est montée sur une jante, cet encombrement "e" est supérieur au jeu défini par la moitié de la différence entre le diamètre Ø du trou de valve et le diamètre extérieur D du corps 2 de la vavle 1 (voir figures 2 et 3).

La forme de l'extrémité axialement intérieure 31 desdits éléments élastiques est telle que la face radialement intérieure de ladite extrémité 31 présente, dans le plan perpendiculaire à l'axe de la valve, une courbure dont le rayon R (voir figure 3) est plus petit que la moitié du diamètre extérieur D du corps de valve.

De préférence, chaque élément élastique 3 prend appui radialement vers l'intérieur sur le corps 2 de valve par deux zones 310 situées aux extrémités des éléments élastiques 3. Cet appui doit avoir lieu au moins en position finale (valve montée). Dans l'exemple décrit, la forme de la valve 1 en position finale correspond sensiblement à la forme initiale de la valve.

Grâce à la forme de ces éléments élastiques, le moment d'inertie de flexion desdits éléments 3 est considérablement augmenté par rapport aux réalisations de l'art antérieur, d'où une tendance moindre de ces éléments 3 à s'écarter ou à se rapprocher radialement du corps 2 de valve. Grâce à l'appui radialement vers l'intérieur, tout rapprochement radial est même rendu impossible sans déformer un élément 3.

On peut encore améliorer la tenue des éléments élastiques en les empêchant en plus de se déplacer radialement vers l'extérieur. Pour cela, il faut que l'extrémité axialement intérieure 31 desdits éléments élastiques prenne appui, en position finale, radialement vers l'extérieur sur la jante. A cette fin, ladite extrémité axialement intérieure 31 peut comporter au moins une protubérance 32 s'étendant axialement vers l'intérieur, et située radialement, en position finale, valve montée, entre le corps 2 de valve et la jante 4.

Ainsi, la mise en place de la valve provoque une déformation par diminution de la courbure des éléments élastiques 3 passant dans le trou de valve ; elle se termine par une compression du joint d'étanchéité 5 et une libération des contraintes de déformation desdits éléments élastiques qui sont alors en appui axialement sur la surface extérieure de la jante et radialement tant sur le corps 2 de valve que sur la jante. Les éléments élastiques 3 se trouvent ainsi parfaitement bloqués et la valve est fermement maintenue à sa place.

Les protubérances 32 permettent également de maintenir la valve 1 centrée par rapport au trou de valve aménagé sur la jante. Si l'on n'a pas prévu de telles protubérances 32, le centrage ne sera assuré que par la déformation du joint d'étanchéité 5 résultant de sa compression. Cela peut parfois être insuffisant pour maintenir le centrage en service. Dans ce cas, il est préférable que ledit encombrement "e" dans le sens radial des éléments élastiques, en position finale, soit supérieur au jeu constitué par la différence entre le diamètre ⌀ du trou de valve et le diamètre D du coprs 2 de la valve 1. Grâce à cela, même si la valve se décentre au point que le corps de valve 2 appuie sur la jante, l'élément élastique du côte opposé ne pourra glisser vers l'intérieur de jante.

Par ces dispositions, on lutte très efficacement contre toute tombée accidentelle des éléments élastiques dans le trou de jante, les efforts auxquels la valve est soumise en service n'étant jamais suffisants pour provoquer un "avalement" des éléments élastiques 3 par le trou de valve de la jante.

## Revendications

1. Valve pour pneumatique sans chambre, du type comportant un corps (2) de valve autour duquel sont disposés des éléments élastiques (3) dans le sens radial et rigides dans le sens axial, lesdits éléments (3) étant susceptibles de se rapprocher du corps (2) de valve pour passer dans le trou de valve aménagé sur la jante, puis de s'écarter vers leur position finale pour assurer la fixation de la valve sur la jante, caractérisée en ce que l'extrémité axialement intérieure (31) de chaque élément élastique (3) présente, en coupe selon un plan perpendiculaire à l'axe de la valve, une section pouvant être déformée élastiquement de façon à faire varier l'encombrement (e) dans le sens radial de ladite section, ledit encombrement (e) dans le sens radial desdits éléments élastiques (3), étant en position finale, supérieur au jeu constitué par la moitié de la différence entre le diamètre (⌀) du trou de valve et le diamètre extérieur (D) du corps (2) de valve.

2. Valve selon la revendication 1, caractérisée en ce que l'extrémité axialement intérieure (31) desdits éléments élastiques (3) prend appui, en position finale, radialement vers l'intérieur sur le corps (2) de valve.

3. Valve selon l'une des revendications 1 ou 2 caractérisée en ce que la face radialement intérieure de l'extrémité axialement intérieure (31) desdits éléments élastiques (3) comporte, dans le plan perpendiculaire à l'axe de la valve, une courbure dont le rayon R est plus petit que la moitié du diamètre extérieur D du corps (2) de valve.

4. Valve selon l'une des revendications 1 à 3, caractérisée en ce que l'extrémité axialement intérieure (31) desdits éléments élastiques (3) prend appui, en position finale, radialement vers l'extérieur sur la jante.

5. Valve selon la revendication 4, caractérisée en ce que l'extrémité axialement intérieure (31) desdits éléments élastiques (3) comporte au moins une protubérance (32) s'étendant axialement vers l'intérieur, située radialement, en position finale, entre le corps (2) de valve et la jante.

6. Valve selon l'une des revendications 1 à 4, caractérisée en ce que l'encombrement (e) dans le sens radial desdits éléments élastiques (3), en position finale, est supérieur au jeu constitué par la différence entre le diamètre (⌀) du trou de valve et le diamètre extérieur (D) du corps de valve.

## Patentansprüche

1. Ventil für schlauchlose Luftreifen, von der Art, die einen Ventilkörper (2) aufweisen, um den elastische Elemente (3), die in radialer Richtung elastisch und in axialer Richtung steif sind, angeordnet sind, wobei die Elemente (3) in der Lage sind, sich dem Ventilkörper (2) zu nähern, um durch das Ventilloch, das in der Felge vorgesehen ist, durch zu gelangen und sich anschließend in ihre endgültige Position auszudehnen, um die Befestigung des Ventils auf der Felge zu sichern, dadurch gekennzeichnet, daß das axial innere Ende (31) jedes elastischen Elementes (3) in einem Schnitt entlang einer Normalebene auf die Ventilachse einen Abschnitt aufweist, der elastisch so deformierbar ist, daß die radiale Einhüllende (e) des Abschnittes verändert werden kann, wobei der radiale Abstand der die elastischen Elemente (3) Einhüllenden (e) in deren Endlage größer ist als das Spiel, das durch die Hälfte der Differenz zwischen dem Durchmesser (⌀) des Ventilloches und dem Außendurchmesser (D) des Ventilkörpers gebildet wird.

2. Ventil nach Anspruch 1, dadurch gekennzeichnet, daß die axial inneren Enden (31) der elastischen Elemente in ihrer Endlage sich radial nach innen auf den Ventilkörper (2) abstützen.

3. Ventil nach einem der Ansprüche 1 oder 2, dadurch gekennzeichnet, daß die radial innere Seite der axial inneren Enden (31) der elastischen Elemente (3) in einer Normalebene auf die Ventilachse eine Krümmung aufweisen, deren Radius (R) kleiner als die Hälfte des Außendurchmessers (D) des Ventilkörpers (2) ist.

4. Ventil nach einem der Ansprüche 1 bis 3, dadurch gekennzeichnet, daß das axial innere Ende (31) der elastischen Elemente (3) sich in der Endlage radial nach außen auf der Felge abstützt.

5. Ventil nach Anspruch 4, dadurch gekennzeichnet, daß das axial innere Ende (31) der elastischen Elemente (3) zumindest einen Vorsprung (32) aufweist, der sich axial nach innen erstreckt und sich in seiner Endlage radial zwischen dem Ventilkörper (2) und der Felge befindet.

6. Ventil nach einem der Ansprüche 1 bis 4, dadurch gekennzeichnet, daß die elastischen Elemente (3) radial Umhüllende (e) in der Endlage größer ist als das Spiel, das durch die Differenz zwischen dem Durchmesser (⌀) des Ventilloches und dem äu-

ßeren Durchmesser (D) des Ventilkörpers gebildet wird.

## Claims

1. A valve for tubeless tires, of the type having a valve body (2) around which elements (3) which are elastic in radial direction and rigid in axial direction are arranged, the elastic elements (3) being capable of moving towards the valve body (2) in order to pass through a valve hole provided in a rim and then move apart towards their final position to assure the fastening of the valve on the rim, characterized by the fact that the axially inner end (31) of each elastic element (3) has, in a plane perpendicular to the axis of the valve, a section which can be elasticly deformed in order to modify the size (e) in radial direction of said section, said size (e) in radial direction of the elastic elements (3), in final position, being greater than the clearance formed by one-half of the difference between the diameter (∅) of the valve hole and the outside diameter (D) of the valve body (2).

2. A valve according to claim 1, characterized by the fact that the axially inner end (31) of the elastic elements (3) rests, in final position, radially inward against the valve body (2).

3. A valve according to one of claims 1 or 2, characterized by the fact that the radially inner face of the axially inner end (31) of the elastic elements (2) has, in a plane perpendicular to the axis of the valve, a curvature whose radius (R) is less than one-half of the outside diameter (D) of the valve body (2).

4. A valve according to one of claims 1 to 3, characterized by the fact that the axially inner end (31) of the elastic element (3) rests, is final position, radially outward against the rim.

5. A valve according to claim 4, characterized by the fact that the axially inner end (31) of the elastic elements (3) comprises at least one protuberance (32) which extends axially inward and, in final position, is located radially between the valve body (2) and the rim.

6. A valve according to one of claims 1 to 4, characterized by the fact that the size (e) in radial direction of the elastic elements (3), in final position, is greater than the clearance formed by the difference between the diameter (∅) of the valve hole and the outside diameter (D) of the valve body.

Fig 1

fig 2

fig 3